# EUROPÄISCHE PATENTSCHRIFT

(11) **EP 2 594 750 B1**
(45) Veröffentlichungstag und Bekanntmachung des Hinweises auf die Patenterteilung: **15.01.2014**
(21) Anmeldenummer: 12192785.9
(22) Anmeldetag: 15.11.2012
(51) Int. Cl.: F01D 25/16, F16C 19/54, F16C 41/02

(54) **Lagervorrichtung und Turbomaschine mit Lagervorrichtung**
Bearing device and turbo engine with bearing device
Dispositif de palier et turbomachine avec dispositif de palier

(30) Priorität: 18.11.2011 DE 102011086674
(43) Veröffentlichungstag der Anmeldung: 22.05.2013
(73) Patentinhaber: Rolls-Royce Deutschland Ltd & Co KG, 15827 Blankenfelde-Mahlow (DE)
(72) Erfinder: Heldner, Sebastian, 10781 Berlin (DE)
(74) Vertreter: Gross, Felix

(56) Entgegenhaltungen:
- DE-U1- 9 214 062
- JP-A- 6 074 315
- US-A- 4 997 292
- US-A1- 2010 142 871

## Beschreibung

Die Erfindung betrifft eine Lagervorrichtung mit einer zweirehigen Anordnung von Wälzlagern. Eine solche Vorrichtung is aus US 2010/0142871 A1 bekannt.

Die Erfindung betrifft eine Lagerungsvorrichtung mit den Merkmalen des Anspruchs 1 und eine Turbomaschine mit einer Lagerungsvorrichtung mit den Merkmalen des Anspruchs 15.

Die Auslegung einer Turbomaschine, insbesondere eines Flugzeugtriebwerkes erfolgt zunächst auf bestimmte geforderte Leistungsmerkmale. Erst anschließend werden die Belastungen der Lagervorrichtungen und anderer mechanischer Komponenten bestimmt. Dies kann dazu führen, dass z.B. ein Triebwerk für eine hohe Leistung optimiert wurde, woraus eine sehr hohe Schublast resultiert, die von Lagervorrichtungen ausgehalten werden muss. Es besteht daher die Aufgabe, Lagervorrichtungen zu schaffen, die flexibel und effizient sehr hohen Anforderungen bei axialen und radialen Belastungen gerecht werden.

Die Aufgabe wird durch eine Lagervorrichtung mit den Merkmalen des Anspruchs 1 gelöst.

Die Lagervorrichtung weist zwei Wälzlager auf, wobei zwischen Lagerrringen der Wälzlager und einem die Lagerrringe umgebenden Bauteil eine Vorrichtung zur Umwandlung einer axialen Kraft zwischen den Wälzlagern in ein Drehmoment an den Lagerringen in der Art eines Kugelgewindetriebes oder eines Planetengewindetriebes angeordnet ist, wobei die Lagerringe durch ein Rückkopplungsmittel so miteinander gekoppelt sind, dass ein Drehmoment an einem Lagerring in ein gegensinniges Drehmoment an jeweils anderen Lagerring umwandelbar ist.

Durch eine solche Lagervorrichtung ist es möglich, dass auftretende Unterschiede in der axialen Lastverteilung zwischen den beiden Wälzlagern der Lagervorrichtung sich selbsttätig durch das Rückkopplungsmittel ausgleichen. Dabei kann die Vorrichtung zur Umwandlung der axialen Kraft in ein Drehmoment (Drehbewegung) z.B. zwischen einem äußeren Lagerring und einem Gehäuse oder einem inneren Lagerring und einer Welle angeordnet sein. Grundsätzlich ist auch eine Kombination der Anordnungen möglich.

Dabei ist es vorteilhaft, wenn die Vorrichtung zur Umwandlung einer axialen Kraft in ein Drehmoment nach der Art eines Kugelgewindetriebes oder eine Planetengewindetriebes erste Nuten mit einer Art Gewindesteigung in den Außenringen und eine zweite Nut mit einer Art Gewindesteigung im Gehäuse aufweist, wobei in den Nuten Ausgleichswälzkörper angeordnet sind. Durch die mit einer Steigung angeordneten Nuten ist es möglich die axiale Bewegung in eine rotatorische Bewegung umzusetzen.

Eine vorteilhafte, da konstruktiv einfache Ausführungsform liegt vor, wenn das Rückkopplungsmittel als Ausgleichswippe ausgebildet ist, wobei ein Drehmoment des einen Außenrings durch die Ausgleichswippe in eine Hebelkraft umsetzbar ist und mittels der Hebelkraft ein gegensinniges Drehmoment am anderen Außenring auslösbar ist. Die Hebelkraft überträgt somit eine Art Rückstellmoment von einem Außenring auf den anderen. Dabei ist es besonders vorteilhaft, wenn die Ausgleichswippe als balkenförmiges Element ausgebildet ist und mit einem Gegenlager am Gehäuse gekoppelt ist, wobei im Betrieb am Gegenlager der Drehpunkt für die Hebelwirkung der Ausgleichswippe liegt. Eine solche Ausgleichswippe nimmt nur wenig Bauraum ein und ist einfach herstellbar.

Grundsätzlich können die Hebelarme der Ausgleichswippe gleich lang sein. Will man aber die Hebelkräfte mit einer größeren Flexibilität einsetzen, so ist es vorteilhaft, wenn die Hebelarme der Ausgleichswippe unterschiedliche Längen aufweisen.

Zusätzlich oder alternativ kann eine Ausführungsform vorteilhafterweise ein Rückkopplungsmittel aufweisen, das eine Umlenkvorrichtung für Kugeln der Vorrichtung zur Umwandlung einer axialen Kraft zwischen den Wälzlagern in ein Drehmoment an den Lagerringen nach der Art eines Kugelgewindetriebes aufweist.

Bei einer weiteren Ausführungsform sind an den Lagerringen jeweils gegenüberliegend schiefe Ebenen angeordnet, wobei die Steigungen der schiefen Ebenen unterschiedliche Vorzeichen aufweisen und ein Rückkopplungsmittel, insbesondere ein kugelförmiges Rückkopplungsmittel, mit der schiefen Ebene an dem Lagerring eines der Wälzlager und der gegenüberliegenden schiefen Ebene an dem Lagerring des anderen Wälzlagers so in Wirkbeziehung steht, dass ein über die eine schiefe Ebene auf das Rückkopplungsmittel übertragenes Drehmoment durch die jeweils andere schiefe Ebene in ein gegensinniges Drehmoment umgewandelt wird. Durch die schiefen Ebenen lässt sich eine Umwandlung mit wenigen beweglichen Teilen realisieren.

Bei einem weiteren vorteilhaften Ausführungsbeispiel weist das Rückkopplungsmittel ein Hydraulikmittel auf, das an einem Ende ein Drehmoment aufnehmen kann, das auf Grund der Form des Hydraulikmittels, insbesondere einer U-Form, ein entgegengesetztes Drehmoment am anderen Ende ausüben kann.

Vorteilhafte Ausführungsformen der Lagervorrichtung weisen Lagerringe und Gehäuse auf, bei denen die Steigung der Nuten in beiden Wälzlagern zwischen 0,2 und 5°, insbesondere zwischen 0,5 und 2° betragen. Für eine größere Flexibilität bei der Umsetzung der Drehmomente ist es sinnvoll, wenn die Steigungen der Nuten in den beiden Wälzlagern unterschiedlich sind.

Bei vorteilhaften Ausführungsformen können die beiden Wälzlager unterschiedlicher Bauart sein, insbesondere kann ein Radiallager mit einem Axiallager kombiniert sein.

Vorteilhafte Ausführungsformen weisen Wälzkörper als Kugeln, Tonnen, Kegeln oder Zylinder auf. Dabei können in einer Lagervorrichtung unterschiedliche Arten von Wälzkörpern in unterschiedlichen Wälzlagern verwendet werden.

Ferner ist bei vorteilhaften Ausführungsformen der Lagevorrichtungen mindestens ein Innenring geteilt ausgebildet

Die Aufgabe wird auch durch eine Turbomaschine, insbesondere ein Flugzeugtriebwerk nach Anspruch 15 gelöst. Dabei ist es besonders vorteilhaft, wenn mindestens eine Lagervorrichtung bei einem dreiwelligen Flugzeugtriebwerk zwischen einer Niederdruckwelle und einer Mitteldruckwelle oder zwischen einer Mitteldruckwelle und einer Hochdruckwelle oder bei einem zweiwelligen Flugzeugtriebwerk zwischen einer Niederdruckwelle und einer Hochdruckwelle angeordnet ist.

In Zusammenhang mit den in den Figuren dargestellten Ausführungsbeispielen wird die Erfindung erläutert. Dabei zeigt
Fig. 1 den grundsätzlichen Aufbau einer Ausführungsform einer Lagervorrichtung;
Fig. 2 eine Detailansicht einer Ausgleichswippe in Funktion;
Fig. 3 eine weitere Ausführungsform mit einem alternativen Rückkopplungsmittel;
Fig. 4 eine weitere Ausführungsform mit einem Rückkopplungsmittel mit einer schiefenen Ebene;
Fig. 5 eine weitere Ausführungsform mit einem Rückkopplungsmittel mit einer hydraulischen Ausgleichtsvorrichtung;
Fig. 6 ein Flugzeigtriebwerk mit Ausführungsformen zweier Lagervorrichtungen.

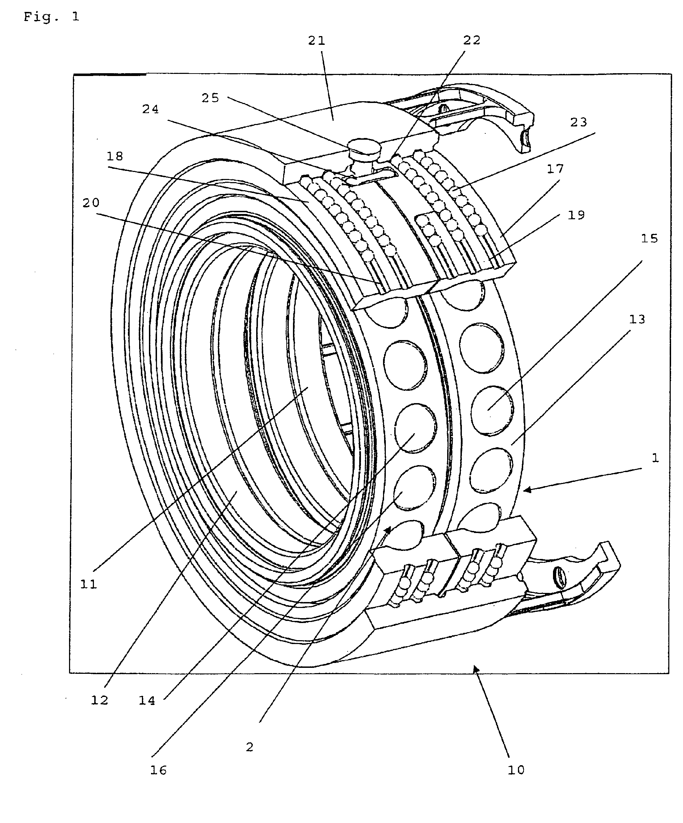

Fig. 1 zeigt eine perspektivische, teilweise geschnittene Darstellung einer mehrreihigen Lagervorrichtung 10. Die hier darstellte Ausführungsform ist als zweireihige Radiallagervorrichtung 10 ausgebildet, d.h. die Lagervorrichtung 10 weist ein erstes Wälzlager 1 und ein zweites Wälzlager 2 auf. Grundsätzlich ist es auch möglich, dass die Wälzlager 1, 2 unterschiedlich ausgebildet sind, d.h. ein reines Axiallager 1 wird mit einem Radiallager 2 zum Übertragen radialer und axialer Kräfte kombiniert.

Die jeweiligen Innenringe 11, 12 der Wälzlager 1, 2 sind in an sich bekannter Weise geteilt. Die Verwendung von geteilten Innenringen ist nicht zwingend, werden aber gerade in Flugzeugtriebwerken häufig verwendet. Auf diese Weise können mehr Wälzkörper 15, 16 verbaut werden als bei Lagern mit ungeteilten Ringen. Der geteilte Innenring 11, 12 ist am inneren Durchmesser angeordnet, denn aufgrund der Fliehkräfte wirken zwischen Kugeln und äußerer Lagerschale höhere Kräfte. Durch einen ungeteilten Außenring 3, 4 lässt sich ein besseres Anschmiegungsverhältnis zwischen Kugel und Laufbahn realisieren, um die Flächenpressungen im Rahmen zu halten. Daher haben schnell drehenden Hauptlager in Triebwerken üblicherweise einen zweigeteilten Innenring 11, 12 und einen einteiligen äußeren Außenring 3, 4 (sog. "Drei-Punkt-Lager"). Grundsätzlich kann auch eine einteilige innere Lagerschale verwendet werden.

Um die Innenringe 11, 12 herum sind jeweils Käfige 13, 14 für die Wälzkörper 15, 16 angeordnet. In der vorliegenden Ausführungsform sind die Wälzkörper 15, 16 als Kugeln ausgebildet. Alternativ können auch Kegel, Zylinder oder Tonnen als Wälzkörper 15, 16 verwendet werden.

Die Wälzkörper 15, 16 sind jeweils außen von Außenringen 17, 18 umgeben. In die radial nach außen gerichteten Flächen der Außenringe 17, 18 sind jeweils spiralförmige erste Nuten 19, 20 in der Art eines Gewindeganges angeordnet. Dies bedeutet, dass die durchgehenden, spiralförmigen ersten Nuten 19, 20 einen gewissen Winkel (analog der Steigung eines Gewindeganges) gegenüber den axialen Begrenzungsflächen der Wälzlager 1, 2 aufweisen. Die Steigung der ersten Nuten 19, 20 ist in dieser Ausführungsform in beiden Innenschalen 17, 18 gleich. In alternativen Ausführungsformen können auch unterschiedliche Steigungen in den beiden Außenringen eingesetzt werden. So können z.B. unterschiedliche, aber definierte Lastverteilungen, z.B. durch unterschiedliche Axiallasttragfähigkeiten der Wälzlager 1, 2, durch unterschiedliche Steigungen erreicht werden.

Nach außen werden beide Außenringe 17, 18 durch ein Gehäuse 21 radial abgeschlossen. Dabei weist das Gehäuse 21 an seiner Innenseite eine umlaufende zweite Nut 22, ebenfalls in Form eines Gewindeganges auf, die auf die ersten Nuten 19, 20 ausgerichtet sind.

In ersten Nuten 19, 20 und der 22 Nut sind Ausgleichswälzkörper 23, hier Form von Kugeln beweglich angeordnet.

Auf Grund der schrägen Anordnung der Nuten 19, 20, 22 und den darin angeordneten Ausgleichswälzkörpern 23 wird eine Art Kugelgewindetrieb geschaffen, der grundsätzlich aus der DIN 69051-1 bekannt ist. Dabei übernimmt das Gehäuse 21 die Funktion der Kugelgewindemutter; die Außenringe 17, 18 übernehmen die Funktionen der Kugelgewindespindel des Kugelgewindetriebes.

Durch die schräge Anordnung der Nuten 19, 20, 22 und den darin laufenden Ausgleichswälzkörpern 23 ist es - wie bei einem Kugelgewindetrieb - möglich, eine axiale Bewegung in eine Drehbewegung umzusetzen; eine axiale Last wird in ein Drehmoment umgewandelt. Eine ähnliche Vorrichtung wie ein Kugelgewindetrieb ist ein Planetenrollentrieb, bei dem ebenfalls eine lineare Bewegung in eine rotatorische Bewegung umsetzbar ist.

Bei einer Relativbewegung zwischen den Außenringen 17, 18 und dem Gehäuse 21 rollen die Ausgleichswälzkörper 23 in den Nuten 19, 20, 22 (d.h. im Gewindegang).

Durch die kleinen Verdrehwinkel ist eine Kugelrückführung wie bei einem herkömmlichen Kugelgewindetrieb nicht notwendig. Übliche Kugelgewindetriebe sind für lange axiale Verfahrwege ausgelegt. In den hier beschrieben Ausführungsformen werden hingegen nur axiale Verfahrwege von weniger als einem Millimeter benötigt.

Über den Gedanken des Kugelgewindetriebes hinaus, geht in der dargestellten Ausführungsform eine Kopplung der beiden Wälzlager 1, 2 durch ein Rückkopplungsmittel, hier in Form einer Ausgleichswippe 24.

Die Ausgleichswippe 24 stellt eine mechanische Kopplung der beiden Außenringe 17, 18 her. Dafür kontaktiert die Ausgleichswippe 24 ein Gegenlager 25, das im Gehäuse 21 angeordnet ist.

Der Ausgleichsmechanismus oder Rückkopplungsmechanismus wirkt aufgrund zwei verschiedener Effekte. Über den Steigungswinkel des Gewindetriebs erzeugt das Lager 1, 2 welches die höhere Axiallast zu ertragen hat ein größeres Rotationsmoment und führt damit einen Lastausgleich herbei. Ferner hat das Lager 1, 2, welches die höhere Axiallast zu ertragen hat, hat auch ein größeres Rollwiderstandsmoment (drag torque). Dieses Moment wirkt in dieselbe Richtung wie das Axiallast-Moment und unterstützt den Lastausgleich.

Mit dieser Rückkopplung ist eine Verbesserung der Lastverteilung möglich, die im Folgenden beschrieben wird.

Bei bekannten zweireihigen Lagervorrichtungen führen schon kleine Bauabweichungen (z.B. im Mikrometerbereich) und / oder Temperaturgradienten zu einer Ungleichverteilung der axialen Lasten in der Lagervorrichtung. Wenn z.B. der Innenring 10°C wärmer ist, als der Außenring, so kann das z.B. zu einem Versatz von 5 µm führen, was dann zu dem Kräfteungleichgewicht in der Lagervorrichtung führt.

Durch die in Fig. 1 dargestellte Ausführungsform kann diese Kräfteungleichverteilung, unabhängig von den Betriebsbedingungen, verringert oder verhindert werden. Die Lagervorrichtung 10 mit der Funktionalität eines Kugelgewindetriebes erlaubt die Umsetzung einer Längsbewegung in eine Drehbewegung. Damit werden z.B. zu übertragende Axialkräfte in ein Drehmoment umgewandelt.

Da die Steigung der zweiten Nuten 19, 20, 21 in den beiden Wälzlagern 1, 2 gleich ist, werden auch die auftretenden Axialkräfte in gleiche Drehmomente umgesetzt. Allerdings lässt die Ausgleichswippe 24, die ähnlich dem Prinzip einer Balkenwaage ausgebildet ist, kleine, jedoch immer einander entgegen gesetzte Drehbewegungen der beiden Außenringe 17, 18 zu. Das Gegenlager 25 hat dabei die Funktion des Drehpunktes für die Ausgleichswippe 24.

Wird ein Wälzlager 1, 2 stärker als das andere Wälzlager 2, 1 belastet, so wirkt es mit einem höheren Drehmoment auf die Ausgleichswippe 24. Die Ausgleichswippe 24 gibt nach und es erfolgt eine entgegengesetzte Drehbewegung der Außenringe 17, 18. Dabei entzieht sich das stärker belastete Wälzlager 1, 2 dem Lastangriff, während gleichzeitig das schwächer belastetes Wälzlager 2, 1 stärker in den Lasteingriff gebracht wird bis wieder ein Kräftegleichwicht herrscht. Durch diese Art der Rückkopplung wird eine ungleiche Lastverteilung zwischen den Wälzlagern 1, 2 vermieden.

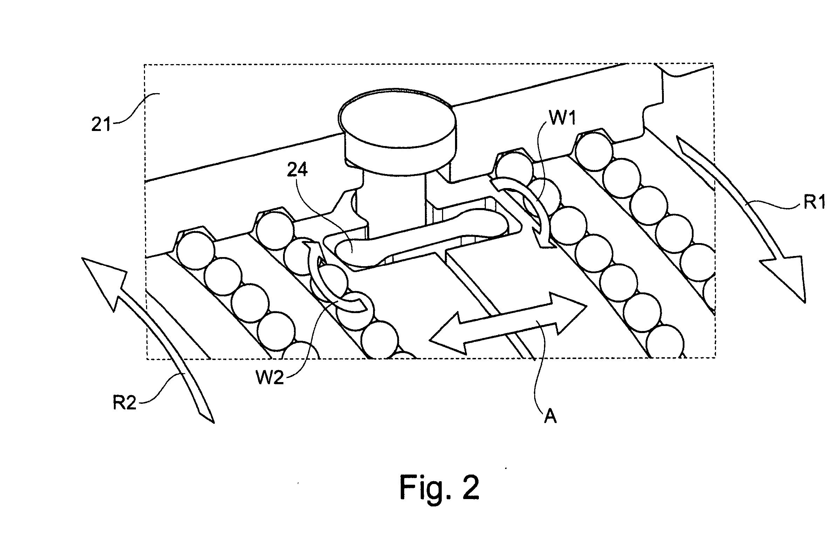

Für die folgenden Ausführungen wird auch auf die Fig. 2 Bezug genommen, in der die Drehmomente und Kräfte dargestellt sind.

Wenn z.B. durch eine Temperaturveränderung das zweite Wälzlager 2 stärker belastet wird als das erste Wälzlager 1 überträgt das zweite Wälzlager 2 eine höhere axiale Last A. Damit überträgt das zweite Wälzlager 2 ein höheres Drehmoment W2, W1 auf die Ausgleichswippe 24. Die Ausgleichswippe 24 verschwenkt sich entsprechend. Der Außenring 18 des zweiten Wälzlagers 2 schraubt sich im Uhrzeigersinn (d.h. in Pfeilrichtung siehe Fig. 1, R2 in Fig. 2). Gleichzeitig schraubt sich der Außenring 17 des ersten Wälzlagers 1 entgegen dem Uhrzeigersinn (R1 in Fig. 2), so dass das erste Wälzlager 1 einen größeren Anteil der Gesamtlast übernimmt, bis wieder ein Kräftegleichgewicht zwischen Wälzlagern 1, 2 hergestellt ist.

In der dargestellten Ausführungsform beträgt die Steigung der Gewindegänge der Nuten 19, 20, 22 1 °. Die Ausgleichswippe 24 weist eine Länge von 18 mm auf.

Eine axiale Verschiebbarkeit von +- 0,05 mm der Außenringe 17, 18, d.h. eine Gesamtverschiebbarkeit von 0,1 mm führt dabei zu einer Verkippung der Ausgleichswippe 24 um +/- 10°. Bei einer Axialkraft von 40 kN pro Wälzlager 1, 2 wirkt auf jedes Ende der Ausgleichswippe 24 eine Kraft von 700 N.

In der Ausführungsform gemäß Fig. 1 und 2 ist die Ausgleichswippe 24 symmetrisch zum Gegenlager 25 ausgebildet; die beiden Hebelarme der Ausgleichswippe 24 sind gleich lang. In alternativen Ausführungsformen kann eine definierte, aber ungleiche Lastverteilung, z.B. auf Grund unterschiedlicher Axiallastfähigkeiten der Wälzlager 1, 2 durch eine asymmetrische Ausgleichswippe 24 erreicht werden. Dann wäre ein Hebelarm der Ausgleichswippe 24 länger als er andere. Durch unterschiedliche Steigungen der Nuten 19, 20, 22 kann auch eine Über- oder Untersetzung der Drehmomente erfolgen.

In der Ausführungsform der Fig. 1 sind die beiden Außenringe 17, 18 der Wälzlager 1, 2 unmittelbar benachbart ausgebildet. Dies ergibt einen kompakten Einbauraum. In alternativen Ausführungsformen können die mit dem Rückkopplungsmittel 24 gekoppelten Außenringe 17, 18 auch voneinander beabstandet sein.

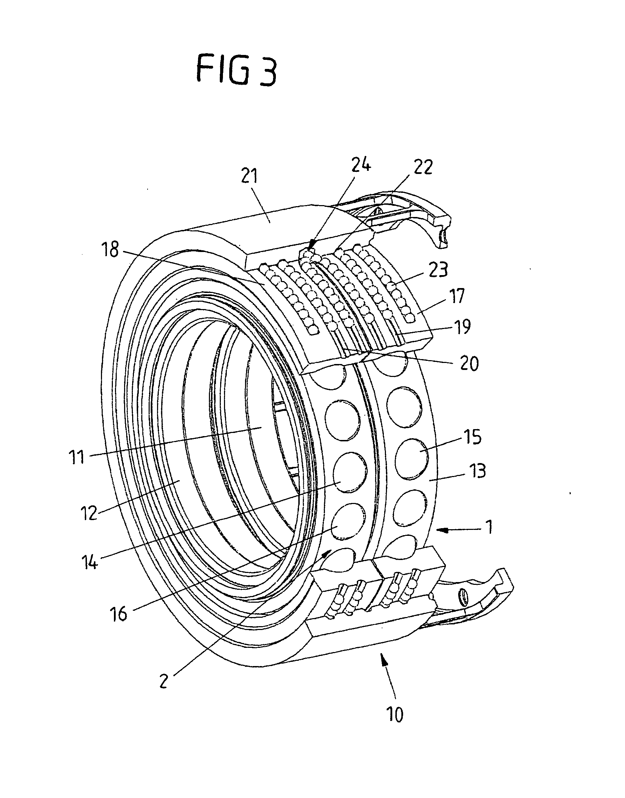

In Fig. 3 ist eine alternative Ausführungsform einer Lagervorrichtung dargestellt, die eine Variante der in Fig. 1 dargestellten Ausführungsform ist. Auf die Beschreibung der Fig. 1 kann Bezug genommen werden.

Allerdings erfolgt die Rückkopplung der Kraftwirkung zwischen den Lagern 1, 2 nicht über eine Ausgleichswippe, sondern über einen durchgehenden Kugelgang mit einem Umlenkmittel 24. Durch die unterschiedlichen Neigungen der Nuten im ersten Lager 1 und im zweiten Lager 2 wird eine gegenläufige Umsetzung der axialen Kraft in ein Drehmoment erreicht. Somit erfolgt auch hier eine Rückstellung durch Rückkopplung.

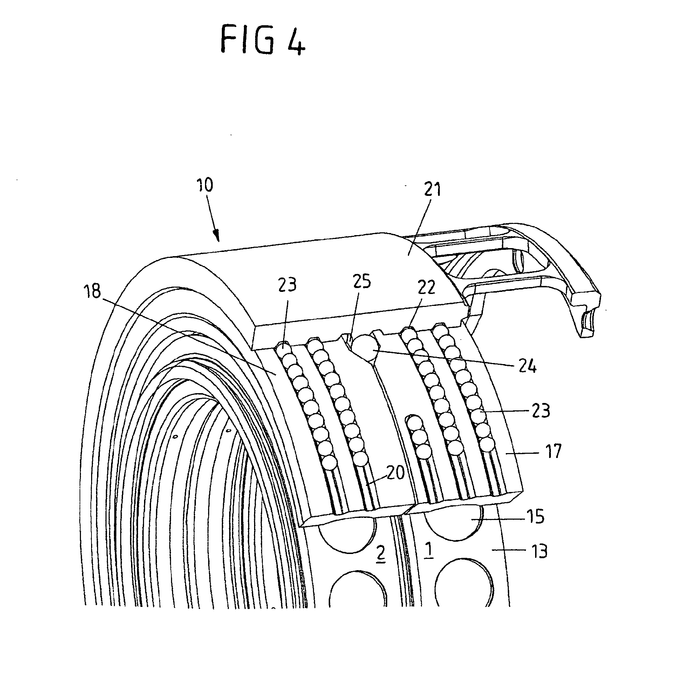

In Fig. 4 ist eine weitere alternative Ausführungsform einer Lagervorrichtung dargestellt, die eine Variante der in Fig. 1 dargestellten Ausführungsform ist. Auf die Beschreibung der Fig. 1 kann Bezug genommen werden. Die Lager 1,2, sind hier über ein Rückkopplungsmittel 24 in Form einer Kugel miteinander gekoppelt, wobei die Kugel 24 mit schiefen Ebenen 26, 27 und dem Gegenlager 25 in Wirkbeziehung stehen.

Die erste schiefe 26 Ebene ist am Außenring 17 des ersten Wälzlagers 1 angeordnet, wobei sich die erste schiefe Ebene 26 senkrecht zum Außenring 17 des ersten Wälzlagers 1 erstreckt. Die Neigung der ersten schiefen Ebene 26 erstrecht sich von äußeren Rand des Außenrings 17 des ersten Wälzlagers 1 in axialer Richtung nach Innen. Die zweite schiefe Ebene 27 ist dazu spiegelbildlich an der gegenüberliegenden Seite des Außenrings 18 des zweiten Wälzlagers 2 angeordnet. Die Steigungen der schiefen Ebenen 26, 27 weisen unterschiedliche Vorzeichen auf, so dass die schiefen Ebenen 26, 27 zusammen einen Winkel bilden, in dem das kugelförmige Rückkopplungsmittel 24 angeordnet ist.

Eine axiale Kraft zwischen den Wälzlagern 1, 2 wird in ein Drehmoment an den Lagerringen 17, 18 umgewandelt, wobei die Lagerringe 17, 18 durch das kugelförmige Rückkopplungsmittel 24 so miteinander gekoppelt sind, dass ein Drehmoment an einem Lagerring 17, 18 durch dies schiefen Ebenen mit Neigungen mit unterschiedlichen Vorzeichen in ein gegensinniges Drehmoment an jeweils anderen Lagerring 18, 17 umwandelbar ist. Ein Drehmoment im äußeren Lagerring 17 des ersten Lagerrings 1 wird über die erste schiefe Ebene 26 auf das kugelförmige Rückkopplungselement 24 übertragen, das wiederum am Gegenlager 25 abgestützt ist. Dadurch wird ein gegensinniges Drehmoment erzeugt, dass von dem kugelförmigen Rückkopplungsmittel 24 über die zweite schiefe Ebene 27 auf das zweite Lager 2 übertragen wird. Damit erfolgt eine Rückstellung in der bereits oben beschriebenen Art und Weise.

Im vorliegenden Fall sind die schiefen Ebenen 26, 27 symmetrisch zur einer Ebene senkrecht zur Lagerachse angeordnet. Dies muss nicht zwingend der Fall sein. Durch unterschiedliche Neigungen der schiefen Ebenen 26, 27 können andere Kraft- und Drehmomentverhältnisse erzeugt werden.

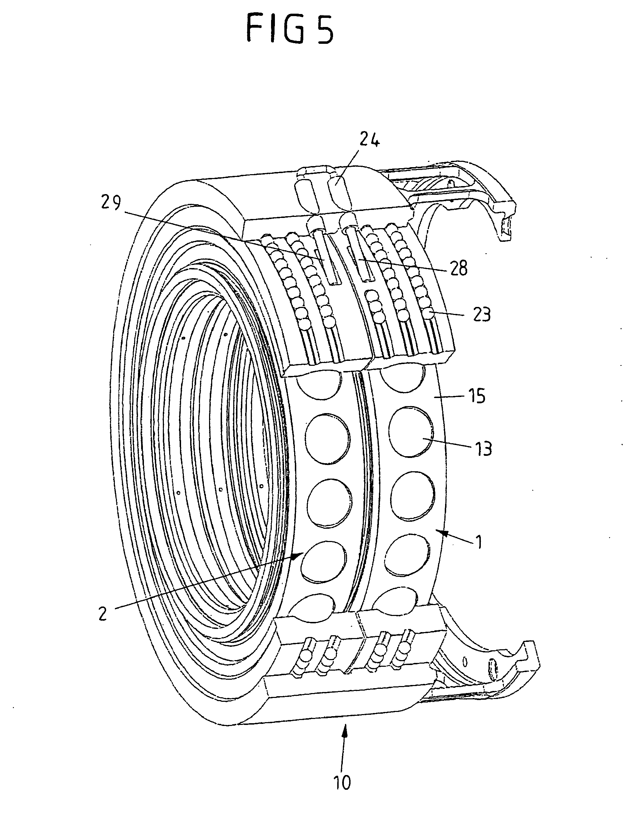

In Fig. 5 ist weitere alternative Ausführungsform einer Lagervorrichtung dargestellt, die eine Variante der in Fig. 1 dargestellten Ausführungsform ist. Auf die Beschreibung der Fig. 1 kann Bezug genommen werden.

Hier erfolgt die Rückkopplung der Kraftwirkung zwischen den Lagern 1, 2 nicht über eine Ausgleichswippe, sondern über ein im Wesentlichen U-förmiges Hydraulikmittel als Rückkopplungsmittel 24. Das Drehmoment ein einem Lager wird über einen ersten Arm 28 des Hydraulikmittels 25 auf einen parallel dazu liegenden zweiten Arm 29 des Hydraulikmittel 24 übertragen. Durch die U-förmige Ausbildung des Hydraulikmittels kann eine Umkehrung der Drehmomente erreicht werden.

Das Hydraulikmittel kann somit an einem Ende ein Drehmoment aufnehmen, das auf Grund der Form des Hydraulikmittels, hier der U-Form, ein entgegengesetztes Drehmoment am anderen Ende ausüben kann.

Die U-Form ist eine zweckmäßige Ausgestaltung für die Umkehrung des Drehmoments. Grundsätzlich sind aber auch andere Formen für das Hydraulikmittel als Rückkopplungsmittel 24 denkbar.

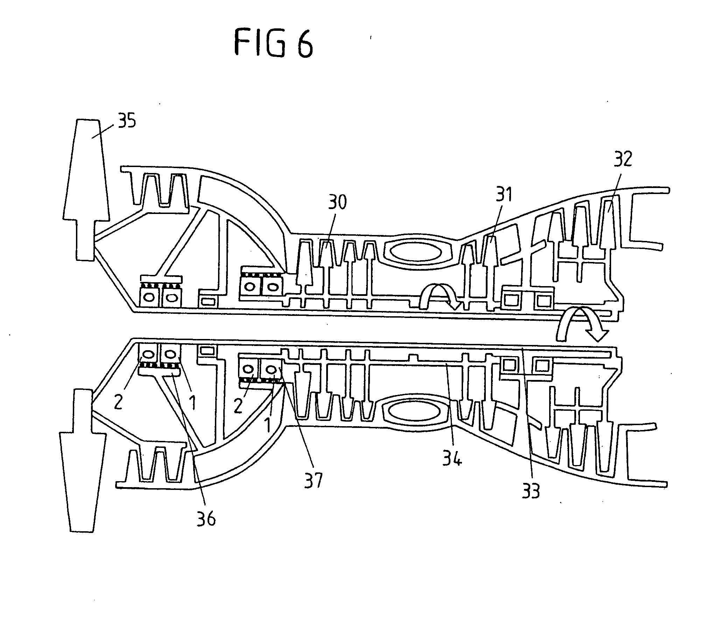

In Fig. 6 ist eine Schnittansicht eines an sich bekannten Flugzeugtriebwerks dargestellt. Dabei weist das Flugzeugtriebwerk zwei Wellen 33, 34 auf. In Strömungsrichtung hinter einem Fan 35 sind ein Hochdruckverdichter 30, eine Hochdruckturbine 31 und eine Niederdruckturbine 32 angeordnet.

Mögliche Einbaustellen für Ausführungen der Lagervorrichtungen sind z.B. das vordere Lager 36 der Niederdruckwelle 34 und / oder das vordere Lager 37 der Hochdruckwelle 33. Die Details der jeweiligen Lager sind aus Gründen der Übersichtlichkeit nur schematisch dargestellt.

### Bezugszeichenliste

- 1: erstes Wälzlager
- 2: zweites Wälzlager

- 10: Lagervorrichtung
- 11: erster Innenring (Lagerring)
- 12: zweiter Innenring (Lagerring)
- 13: Käfig für Wälzkörper des ersten Wälzlagers
- 14: Käfig für Wälzkörper des zweiten Wälzlagers
- 15: Wälzkörper des ersten Wälzlagers
- 16: Wälzkörper des zweiten Wälzlagers
- 17: Außenring (Lagerring) des ersten Wälzlagers
- 18: Außenring (Lagerring) des zweiten Wälzlagers
- 19: erste Nut im Außenring des ersten Wälzlagers
- 20: erste Nut im Außenring des zweiten Wälzlagers
- 21: Gehäuse
- 22: zweite Nut auf Innenseite des Gehäuses
- 23: Ausgleichswälzkörper
- 24: Ausgleichswippe, Umlenkmittel (Rückkopplungsmittel)
- 25: Gegenlager
- 26: erste schiefe Ebene
- 27: zweite schiefe Ebene
- 28: erster Arm eines Hydrauliklimittels
- 29: zweiter Arm eines Hydraulikmittels

- 30: Hochdruckverdichter
- 31: Hochdruckturbine
- 32: Niederdruckturbine
- 33: Hochdruckwelle
- 34: Niederdruckwelle
- 35: Fan
- 36: vorderes Lager der Niederdruckwelle
- 37: vorderes Lager der Hochdruckwelle

- A: Axialkraft
- R1: Drehmoment erstes Wälzlager
- R2: Drehmoment zweites Wälzlager
- W1: Verkippung Ausgleichswippe
- W2: Verkippung Ausgleichswippe

## Patentansprüche

1. Lagervorrichtung mit einer zweireihigen Anordnung von Wälzlagern (1, 2),
**dadurch gekennzeichnet, dass**
zwischen Lagerringen (11, 12, 17, 18) der Wälzlager (1, 2) und einem die Lagerringe (1, 12, 17, 18) umgebenden Bauteil (21) eine Vorrichtung zur Umwandlung einer axialen Kraft zwischen den Wälzlagern (1, 2) in ein Drehmoment an den Lagerringen (11, 12, 17, 18) in der Art eines Kugelgewindetriebes oder eines Planetengewindetriebes angeordnet ist, wobei die Lagerrringe (11, 12, 17, 18) durch ein Rückkopplungsmittel (24) so miteinander gekoppelt sind, dass ein Drehmoment an einem Lagerring (11, 12, 17, 18) in ein gegensinniges Drehmoment an jeweils anderen Lagerring (12, 11, 18, 17) umwandelbar ist.

2. Lagervorrichtung nach Anspruch 1, **dadurch gekennzeichnet, dass** die Vorrichtung zur Umwandlung einer axialen Kraft in ein Drehmoment nach der Art eines Kugelgewindetriebes erste Nuten (19, 20) mit einer Art Gewindesteigung in den Lagerringen (11, 12, 17, 18) und eine zweite Nut (22) mit einer Art Gewindesteigung im Gehäuse (21) aufweist, wobei in den Nuten (19, 20, 22) Ausgleichswälzkörper (23) angeordnet sind.

3. Lagervorrichtung nach Anspruch 1 oder 2, **dadurch gekennzeichnet , dass** das Rückkopplungsmittel als Ausgleichswippe (24) ausgebildet ist, wobei ein Drehmoment (R1, R2) des einen Außenrings (17, 18) durch die Ausgleichswippe (24) in eine Hebelkraft (W1, W2) umsetzbar ist und mittels der Hebelkraft (W1, W2) ein gegensinniges Drehmoment (R2, R1) am anderen Außenring (18, 17) auslösbar ist.

4. Lagervorrichtung nach Anspruch 3, **dadurch gekennzeichnet, dass** die Ausgleichswippe (24) als balkenförmiges Element ausgebildet ist und mit einem Gegenlager (25) am Gehäuse (21) gekoppelt ist, wobei im Betrieb am Gegenlager (25) der Drehpunkt für die Hebelwirkung der Ausgleichswippe (24) liegt.

5. Lagervorrichtung nach Anspruch 3 oder 4, **dadurch gekennzeichnet , dass** die Hebelarme der Ausgleichswippe (24) unterschiedliche Längen aufweisen.

6. Lagervorrichtung nach mindestens einem der vorhergehenden Ansprüche, **dadurch gekennzeichnet , dass** das Rückkopplungsmittel (24) ein Umlenkvorrichtung für Kugeln der Vorrichtung zur Umwandlung einer axialen Kraft zwischen den Wälzlagern (1, 2) in ein Drehmoment an den Lagerringen (11, 12, 17, 18) nach der Art eines Kugelgewindetriebes aufweist.

7. Lagervorrichtung nach mindestens einem der vorhergehenden Ansprüche, **dadurch gekennzeichnet, dass** an den Lagerringen (11, 12, 17, 18) jeweils gegenüberliegend schiefe Ebenen (26, 27) angeordnet sind, wobei die Steigungen der schiefen Ebenen (26, 27) unterschiedliche Vorzeichen aufweisen und ein Rückkopplungsmittel (24), insbesondere ein kugelförmiges Rückkopplungsmittel (24), mit der schiefen Ebene (26) an dem Lagerring (11, 17) eines der Wälzlager (1, 2) und der gegenüberliegenden schiefen Ebene (27) an dem Lagerring (12, 18) des anderen Wälzlagers (2, 1) so in Wirkbeziehung steht, dass ein über die eine schiefe Ebene (26, 27) auf das Rückkopplungsmittel (24) übertragenes Drehmoment durch die jeweils andere schiefe Ebene (27, 26) in ein gegensinniges Drehmoment umgewandelt wird.

8. Lagervorrichtung nach mindestens einem der vorhergehenden Ansprüche, **dadurch gekennzeichnet , dass** das Rückkopplungsmittel 24 ein Hydraulikmittel aufweist, das an einem Ende ein Drehmoment aufnehmen kann, dass auf Grund der Form des Hydraulikmittels, insbesondere einer U-Form, ein entgegengesetztes Drehmoment am anderen Ende ausüben kann.

9. Lagervorrichtung nach mindestens einem der vorhergehenden Ansprüche, **dadurch gekennzeichnet, dass** die Steigung der Nuten (19, 20, 22) in beiden Wälzlagern (1, 2) zwischen 0,2 und 5°, insbesondere zwischen 0,5 und 2° betragen.

10. Lagervorrichtung nach mindestens einem der vorhergehenden Ansprüche, **dadurch gekennzeichnet, dass** die Steigungen der Nuten (19, 20, 22) in den beiden Wälzlagern (1, 2) unterschiedlich sind.

11. Lagervorrichtung nach mindestens einem der vorhergehenden Ansprüche, **dadurch gekennzeichnet, dass** die Vorrichtung zur Umwandlung einer axialen Kraft zwischen den Wälzlagern (1, 2) in ein Drehmoment mit den Außenringen (17, 18) oder den Innenringen (11, 12) gekoppelt ist.

12. Lagervorrichtung nach mindestens einem der vorhergehenden Ansprüche, **dadurch gekennzeichnet , dass** die beiden Wälzlager (1, 2) unterschiedlicher Bauart sind, insbesondere als Radiallager (1, 2) und als Axiallager (2, 1) ausgebildet sind.

13. Lagervorrichtung nach mindestens einem der vorhergehenden Ansprüche, **dadurch gekennzeichnet , dass** die Wälzkörper (15, 16) als Kugeln, Tonnen, Kegeln oder Zylinder ausgebildet sind.

14. Lagervorrichtung nach mindestens einem der vorhergehenden Ansprüche, **dadurch gekennzeichnet , dass** mindestens ein Innenring (11, 12) geteilt ausgebildet ist.

15. Turbomaschine, insbesondere ein Flugzeugtriebwerk mit mindestens einer Lagevorrichtung (10) gemäß mindestens einem der Ansprüche 1 bis 14.

16. Turbomaschine nach Anspruch 15, **dadurch gekennzeichnet**, mindestens eine Lagervorrichtung (10) bei einem dreiwelligen Flugzeugtriebwerk zwischen einer Niederdruckwelle und einer Mitteldruckwelle oder zwischen einer Mitteldruckwelle und einer Hochdruckwelle oder bei einem zweiwelligen Flugzeugtriebwerk zwischen einer Niederdruckwelle und einer Hochdruckwelle angeordnet ist.

## Claims

1. Bearing device with a two-row arrangement of anti-friction bearings (1, 2),
**characterized in that**
between bearing races (11, 12, 17, 18) of the anti-friction bearings (1, 2) and a component (21) surrounding the bearing races (11, 12, 17, 18) is arranged a device for converting an axial force between the anti-friction bearings (1, 2) into a torque at the bearing races (11, 12, 17, 18) in the manner of a ball screw or planetary screw drive assembly, where the bearing races (11, 12, 17, 18) are connected to one another by a feedback means (24) such that a torque at one bearing race (11, 12, 17, 18) can be converted into an opposite torque at the other bearing race (12, 11, 18, 17).

2. Bearing device according to Claim 1, **characterized in that** the device for converting an axial force into a torque in the manner of a ball screw assembly has first grooves (19, 20) with a type of thread pitch in the bearing races (11, 12, 17, 18) and a second groove (22) with a type of thread pitch in the housing (21), with compensating rolling elements (23) being arranged in the grooves (19, 20. 22).

3. Bearing device according to Claim 1 or 2, **characterized in that** the feedback means is designed as a compensating rocker (24), wherein a torque (R1, R2) of the one outer race (17, 18) can be converted using the compensating rocker (24) into a leverage (W1, W2) and by means of the leverage (W1, W2) an opposite torque (R2, R1) can be initiated at the other outer race (18, 17).

4. Bearing device according to Claim 3, **characterized in that** the compensating rocker (24) is designed as a beam-shaped element and connected to a counter bearing (25) on the housing (21), where during operation the pivot point for the leverage effect of the compensating rocker (24) is on the counter bearing (25).

5. Bearing device according to Claim 3 or 4, **characterized in that** the lever arms of the compensating rocker (24) have different lengths.

6. Bearing device according to at least one of the preceding Claims, **characterized in that** the feedback means (24) has a deflecting device for balls of the device for converting an axial force between the anti-friction bearings (1, 2) into a torque at the bearing races (11, 12, 17, 18) in the manner of a ball screw assembly.

7. Bearing device according at least one of the preceding Claims, **characterized in that** inclined planes (26, 27) are arranged on the bearing races (11, 12, 17, 18) each opposite to one another, wherein the pitches of the inclined planes (26, 27) have different prefixes and a feedback means (24), in particular a ball-like feedback means (24), is operatively related to the inclined plane (26) at the bearing race (11, 17) of one of the anti-friction bearings (1, 2) and to the opposite inclined plane (27) at the bearing race (12, 18) of the other anti-friction bearing (2, 1), such that a torque transmitted via the one inclined plane (26, 27) to the feedback means (24) is converted by the other inclined plane (27, 26) into an opposite torque.

8. Bearing device according to at least one of the preceding Claims, **characterized in that**the feedback means (24) has a hydraulic means capable of absorbing a torque at one end and is able to exert an opposite torque at the other end, due to the shape of the hydraulic means, in particular all-shape.

9. Bearing device according to at least one of the preceding Claims, **ccharacterized in that** the pitch of the grooves (19, 20, 22) in both anti-friction bearings (1, 2) is between 0.2 and 5°, in particular between 0.5 and 2°.

10. Bearing device according to at least one of the preceding Claims, **characterized in that** the pitches of the grooves (19, 20, 22) in the two anti-friction bearings (1, 2) differ.

11. Bearing device according to at least one of the preceding Claims, **characterized in that** the device for converting an axial force between the anti-friction bearings (1, 2) into a torque is coupled to the outer races (17, 18) or the inner races (11, 12).

12. Bearing device according to at least one of the preceding Claims, **characterized in that** the two anti-friction bearings (1, 2) are of different design, in particular that they are designed as radial bearings (1, 2) and axial bearings (2, 1).

13. Bearing device according to at least one of the preceding Claims, **characterized in that** the rolling elements (15, 16) are spherical, barrelled, tapered or cylindrical.

14. Bearing device according to at least one of the preceding Claims, **characterized in that** at least one inner race (11, 12) is of split design.

15. Turbomachine, in particular an aircraft engine with at least one bearing device (10) according to at least one of the Claims 1 to 14.

16. Turbomachine according to with Claim 15, **characterized in that** at least one bearing device (10) in a three-shaft aircraft engine is arranged between a low-pressure shaft and an intermediate-pressure shaft or between an intermediate-pressure shaft and a high-pressure shaft, or - in the case of a two-shaft aircraft engine - between a low-pressure shaft and a high-pressure shaft.

## Revendications

1. Dispositif de palier avec un arrangement en deux rangées de paliers à roulement (1, 2),
**caractérisé en ce**
**qu'**entre des bagues de palier (11, 12, 17, 18) des paliers à roulement (1, 2) et un composant (21) entourant les bagues de palier (11, 12, 17, 18) est placé un dispositif destiné à transformer une force axiale entre les paliers à roulement (1, 2) en un couple de rotation sur les bagues de palier (11, 12, 17, 18) à la manière d'une vis d'entraînement à billes ou d'une vis d'entraînement à roulement planétaire, dans lequel les bagues de palier (11, 12, 17, 18) sont couplées entre elles par un moyen de rétrocouplage (24) de sorte qu'un couple de rotation sur une bague de palier (11, 12, 17, 18) peut être transformé en un couple de rotation en sens inverse sur l'autre bague de palier (12, 11, 18, 17).

2. Dispositif de palier selon la revendication n° 1, **caractérisé en ce que** le dispositif destiné à transformer une force axiale en un couple de rotation à la manière d'une vis d'entraînement à billes présente des premières gorges (19, 20) avec un type de pas de filetage dans les bagues de palier (11, 12, 17, 18) et une seconde gorge (22) avec un type de pas de filetage dans le logement (21), des éléments roulants compensateurs (23) étant disposés dans les gorges (19, 20, 22).

3. Dispositif de palier selon la revendication n° 1 ou n° 2, **caractérisé en ce que** le moyen de rétrocouplage est conçu en tant que bascule compensatrice (24), dans lequel un couple de rotation (R1, R2) de l'une bague extérieure (17, 18) peut être transformé en un effet de levier (W1, W2) par la bascule compensatrice (24), et dans lequel par l'effet de levier (W1, W2), un couple de rotation en sens inverse (R2, R1) peut être déclenché sur l'autre bague extérieure (18, 17).

4. Dispositif de palier selon la revendication n° 3, **caractérisé en ce que** la bascule compensatrice (24) est conçue en tant qu'élément en forme de barre et couplée à une butée (25) sur le logement (21), dans lequel en fonctionnement, le centre de rotation pour l'effet de levier de la bascule compensatrice (24) se situe sur la butée (25).

5. Dispositif de palier selon la revendication n° 3 ou n° 4, **caractérisé en ce que** les bras de levier de la bascule compensatrice (24) présentent des longueurs différentes.

6. Dispositif de palier selon au moins l'une des revendications précédentes, **caractérisé en ce que** le moyen de rétrocouplage (24) présente un dispositif déviateur pour les billes du dispositif destiné à transformer une force axiale entre des paliers à roulement (1, 2) en un couple de rotation sur les bagues de palier (11, 12, 17, 18) à la manière d'une vis d'entraînement à billes.

7. Dispositif de palier selon au moins l'une des revendications précédentes, caractérisé e n ce que sur les bagues de palier (11, 12, 17, 18) sont disposés des plans inclinés respectivement opposés (26, 27), dans lequel les pentes des plans inclinés (26, 27) présentent des signes différents, et dans lequel un moyen de rétrocouplage (24), en particulier un moyen de rétrocouplage (24) sphérique, est en liaison opérationnelle avec le plan incliné (26) sur la bague de palier (11, 17) d'un des paliers à roulement (1, 2) et avec le plan incliné opposé (27) sur la bague de palier (12, 18) de l'autre palier à roulement (2, 1), de sorte qu'un couple de rotation transmis au moyen de rétrocouplage (24) par l'un plan incliné (26, 27) est transformé en un couple de rotation en sens inverse par l'autre plan incliné (27, 26).

8. Dispositif de palier selon au moins l'une des revendications précédentes, **caractérisé en ce que** le moyen de rétrocouplage (24) présente un moyen hydraulique qui peut absorber un couple de rotation à une extrémité, dans lequel le moyen de rétro couplage (24) peut exercer en raison de la forme du moyen hydraulique, en particulier une forme en U, un couple de rotation opposé à l'autre extrémité.

9. Dispositif de palier selon au moins l'une des revendications précédentes, **caractérisé en ce que** la pente des gorges (19, 20, 22) dans les deux paliers à roulement (1, 2) est comprise entre 0,2 et 5°, en particulier entre 0,5 et 2°.

10. Dispositif de palier selon au moins l'une des revendications précédentes, **caractérisé en ce que** les pentes des gorges (19, 20, 22) dans les deux paliers à roulement (1, 2) sont différentes.

11. Dispositif de palier selon au moins l'une des revendications précédentes, **caractérisé en ce que** le dispositif destiné à transformer une force axiale entre les paliers à roulement (1, 2) en un couple de rotation est couplé avec les bagues extérieures (17, 18) ou avec les bagues intérieures (11, 12).

12. Dispositif de palier selon au moins l'une des revendications précédentes, **caractérisé en ce que** les deux paliers à roulement (1, 2) sont de types différents, en particulier qu'ils sont conçus en tant que paliers radiaux (1, 2) et paliers axiaux (2, 1).

13. Dispositif de palier selon au moins l'une des revendications précédentes, **caractérisé en ce que** les éléments roulants (15, 16) sont conçus en tant que billes, tonneaux, cônes ou cylindres.

14. Dispositif de palier selon au moins l'une des revendications précédentes, **caractérisé en ce qu'**au moins une bague intérieure (11, 12) est conçue de manière séparée.

15. Turbomachine, en particulier un moteur d'avion avec au moins un dispositif de palier (10) selon au moins l'une des revendications n° 1 à n° 14.

16. Turbomachine selon la revendication n° 15, **caractérisée en ce qu'**au moins un dispositif de palier (10) est arrangé entre un arbre basse pression et un arbre moyenne pression ou entre un arbre moyenne pression et un arbre haute pression dans le cas d'un moteur d'avion à trois arbres, ou - dans le cas d'un moteur d'avion à deux arbres - entre un arbre basse pression et un arbre haute pression.
